# EUROPÄISCHE PATENTANMELDUNG

(11) **EP 4 273 271 A1**
(43) Veröffentlichungstag der Anmeldung: **08.11.2023**
(21) Anmeldenummer: 22171878.6
(22) Anmeldetag: 05.05.2022
(51) Int. Cl.: C21B 13/00, F27D 19/00

(54) **VERFAHREN UND VORRICHTUNG ZUR REDUKTION VON METALLOXIDHALTIGEM MATERIAL**

(71) Anmelder: Primetals Technologies Austria GmbH, 4031 Linz (AT)
(72) Erfinder: Millner, Robert, 3382 Loosdorf (AT); Sterrer, Wolfgang, 4851 Gampern (AT)
(74) Vertreter: Metals@Linz

(57) **Zusammenfassung**

Verfahren zur Reduktion von metalloxidhaltigem Material,
wobei ein zumindest Wasserstoff enthaltendes Reduktionsgas
einem Reduktionsreaktor (3) zugeführt wird,
und aus dem Reduktionsreaktor (3) ein Wasserstoff enthaltendes Topgas ausgeleitet wird. Eine Teilmenge des Topgases wird bei der Zubereitung des Reduktionsgases eingesetzten Gasbrennern (6) als Komponente des Brennstoffgases zugeführt. Bei Zunahme des Anteils von Wasserstoff im Reduktionsgas und/oder im Topgas wird eine Erhöhung des Wasserdampfgehaltes des Brennstoffgases vorgenommen wird. Eine Vorrichtung dafür umfasst einen Reduktionsreaktor (3), eine Topgasausleitung (5) zur Ausleitung von Topgas aus dem Reduktionsreaktor (3), eine zumindest einen Gasbrenner (6) umfassende Zubereitungsanlage (7) zur Zubereitung von Reduktionsgas, eine Zufuhrleitung (8) zur Zufuhr einer Teilmenge des Topgases als Brennstoffgas-Komponente zu dem zumindest einen Gasbrenner (6). Sie ist dadurch gekennzeichnet, dass sie auch zumindest eine Vorrichtung (9) zur Bestimmung des Wasserdampfgehaltes im Reduktionsgas und/oder im Topgas, und eine Vorrichtung (10) zur Steuerung und/oder Regelung des Wasserdampfgehaltes im Brennstoffgas unter Einbeziehung des Wasserstoffgehaltes im Reduktionsgas und/oder im Topgas umfasst.

## Beschreibung

### Gebiet der Technik

Die Anmeldung betrifft Verfahren und Vorrichtung zur Reduktion von metalloxidhaltigem Material,
wobei Reduktionsgas eingesetzt wird.

### Stand der Technik

Es ist bekannt, metalloxidhaltiges, beispielsweise eisenoxidhaltiges, Material - wie beispielsweise Erze - mittels reduzierenden Gases zu reduzieren. So etwa mittels Direktreduktion mit Reduktionsgas in einem Reduktionsaggregat, wie beispielsweise einem Reduktionsschacht. Bei derzeit großindustriell angewendeten, herkömmlichen Verfahren basiert das Reduktionsgas überwiegend auf Kohlenstoff - beispielsweise in Kohlenmonoxid CO oder Methan CH₄ - aus Erdgas. Daher fallen dabei große Mengen Kohlendioxid CO₂ an, was unter anderem aus umweltpolitischen Gründen unerwünscht ist.

Zur Verminderung des CO₂-Ausstoßes bei der Reduktion von metalloxidhaltigem Material ist es bekannt, Wasserstoff H₂ als reduzierendes Gas zu verwenden. Dabei kann Wasserstoff als einziges Reduktionsgas verwendet werden, oder in Kombination mit anderen Gasen, die beispielsweise auf Kohlenstoff aus Erdgas basieren. Je größer der Anteil von bezüglich Reduktionsreaktionen CO₂-neutralem Wasserstoff H₂ im Reduktionsgas ist, desto weniger CO₂ wird emittiert. Je nach Verfügbarkeit von Erdgas und Wasserstoff kann das Verhältnis ihres Beitrags zum Reduktionsgas verändert werden, indem verschiedene Mengen gemischt werden.

Je mehr Wasserstoff zur Verfügung steht, desto mehr kann auf einen klimaproblematischen Beitrag auf Basis von Kohlenstoff aus Erdgas verzichtet werden.

Es ist günstig, bestehende Anlagen und Verfahrensweisen, bei denen das Reduktionsgas überwiegend auf Kohlenstoff aus Erdgas basiert, auch mit erhöhten Anteilen von Wasserstoff im Reduktionsgas zu betreiben. Das ermöglicht flexibles Reagieren auf die Verfügbarkeit von Erdgas und Wasserstoff, und erlaubt die Ausnutzung bereits getätigter Anlageninvestitionen.

Zumindest bis ausreichende Mengen Wasserstoff für Verwendung von vollständig auf Wasserstoff basierenden Reduktionsgasen zur Verfügung stehen, wird sich Reduktionsgas noch auf Kohlenstoff aus Erdgas stützen müssen.

Es ist üblich, einem das metalloxidhaltige Material enthaltenden Reduktionsreaktor Reduktionsgas zuzuführen, und
aus dem Reduktionsreaktor ein Topgas auszuleiten. Das Topgas entsteht aus dem Reduktionsgas beim Durchströmen des Reduktionsreaktors aufgrund der im Reduktionsreaktor stattfindenden Reaktionen seiner Komponenten mit dem metalloxidhaltigen Material - beziehungsweise den bei diesen Reaktionen entstehenden Produkten, beispielsweise dem entstehenden metallischen Eisen. Das Topgas besitzt infolge der im Reduktionsreaktor stattgefundenen Reduktionsreaktionen weniger Reduktionskraft als das Reduktionsgas, und es weist einen Brennwert auf. Zur Nutzung der Reduktionskraft wird Topgas oft als Komponente bei der Zubereitung von frischem Reduktionsgas genutzt.

Das Reduktionsgas wird oft in einer Gaserhitzungsvorrichtung mittels Gasbrennern erhitzt, um die für die Reduktionsreaktionen gewünschte Temperatur zu erhalten. Bei Verfahren, bei denen die Herstellung des Reduktionsgases auf Reformierung eines Vorläufergases - beispielsweise Erdgas - beruht, wird für die Reformierung oft von Gasbrennern Energie bereitgestellt.

Gasbrenner benötigen ein Brennstoffgas und ein Oxidationsgas - beispielsweise Luft; bei der Verbrennung wird das Brennstoffgas oxidiert, was Energie freisetzt.

Es ist bekannt, dass aufgrund seines Brennwertes geeignete Topgas als Brennstoffgas zu nutzen.

Mit steigendem Anteil von Wasserstoff im Reduktionsgas nimmt auch der Anteil von Wasserstoff im Topgas zu. Das hat bei Verwendung als Brennstoffgas den Nachteil, dass bei der Verbrennung die adiabatische Flammentemperatur steigt. Der Anstieg der adiabatischen Flammentemperatur kann sich ungünstig auswirken:
- bei Verwendung von Luft als Oxidationsgas ist eine erhebliche Menge an Stickstoff zugegen; mit steigender adiabatischer Flammentemperatur entstehen mehr ungewünschte Stickoxide NOₓ. Der Stickstoff kann aber auch aus brennbaren Stickstoffgasen, wie etwa Ammoniak NH₃, die sich im Brennstoffgas befinden - sogenannter Brennstoffstickstoff - oder aus gasförmigem Stickstoff N₂ im Brennstoffgas stammen.
- zwecks energetischer Optimierung werden Gase wie Oxidationsgas, Brennstoffgas, Vorläufer des Reduktionsgases oft durch Wärmetausch mit dem Abgas der Gasbrenner erwärmt. Dabei erfolgt die Wärmeübertragung oft durch Strahlung. Steigende adiabatische Flammentemperatur kann die strahlungsbasierte Wärmeübertragung ungünstig beeinflussen.

### Zusammenfassung der Erfindung

### Technische Aufgabe

Es ist die Aufgabe der vorliegenden Erfindung, einen Beitrag zur Verminderung zumindest einiger der vorgenannten Probleme vorzustellen.

### Technische Lösung

Die Aufgabe wird gelöst durch ein
Verfahren zur Reduktion von metalloxidhaltigem Material,
wobei ein zumindest Wasserstoff, gegebenenfalls auch Kohlenstoffträger, enthaltendes Reduktionsgas
einem das metalloxidhaltige Material enthaltenden Reduktionsreaktor zugeführt wird, und aus dem Reduktionsreaktor ein Wasserstoff enthaltendes Topgas ausgeleitet wird, dadurch gekennzeichnet, dass
eine Teilmenge des Topgases bei der Zubereitung des Reduktionsgases eingesetzten Gasbrennern als Komponente des Brennstoffgases zugeführt wird,
und bei Zunahme des Anteils von Wasserstoff im Reduktionsgas und/oder im Topgas eine Erhöhung des Wasserdampfgehaltes des Brennstoffgases vorgenommen wird.

Bei dem metalloxidhaltigen Material handelt es sich bevorzugt um eisenoxidhaltiges Material.

Das Reduktionsgas enthält als reduzierend wirkende Komponente zumindest Wasserstoff. Es kann auch aus Wasserstoff bestehen. Gegebenenfalls enthält das Reduktionsgas auch einen oder mehrere gasförmige Kohlenstoffträger als zusätzliche reduzierend wirkende Komponente beziehungsweise Komponenten. Kohlenstoffträger werden beispielsweise durch Erdgas beigesteuert; es handelt sich beispielsweise um durch Erdgas eingebrachtes oder aus Erdgas erzeugtes Kohlenmonoxid CO oder Methan CH₄.

Dabei kann es sich beispielsweise um grünen, blauen, grauen, türkisen, pinken Wasserstoff handeln. Unter diesen "Farben" ist die Farbgebung in Zusammenhang mit der zugrundeliegenden Produktionsart zu verstehen. Grüner Wasserstoff ist beispielsweise durch Elektrolyse von Wasser mittels Strom aus erneuerbaren Energien erzeugt, oder durch Vergasung oder Vergärung von Biomasse, oder Dampfreformierung von Biogas - gemeinsam ist den Produktionsarten von grünem Wasserstoff, dass die Produktion CO₂-frei erfolgt. Bei blauem Wasserstoff wird bei der Produktion entstehendes CO₂ gespeichert, so dass es nicht in die Atmosphäre gelangt; beispielsweise, wenn er unter Sequestrierung von entstehendem Kohlendioxid CO₂ erzeugt wurde. Bei türkisem Wasserstoff wird unter Abscheidung von entstehendem Kohlenstoff C erzeugt. Bei pinkem Wasserstoff wird Wasserstoff unter Verwendung von Atomstrom erzeugt. Bei grauem Wasserstoff wird aus fossilen Brennstoffen erzeugt - beispielsweise aus Erdgas mittels Dampfreformierung - wobei das entstehende CO₂ überwiegend in die Atmosphäre abgegeben wird.

Auch in Frage kommen andere Farben des Wasserstoffs.

Ebenso in Frage kommt ein Gemisch aus einem oder mehreren dieser "Farben" des Wasserstoffs.

Wenn Kohlenstoffträger als zusätzliche reduzierend wirkende Komponenten vorhanden sind, gilt: das Verhältnis der Anteile von Wasserstoff und Kohlenstoffträgern im Reduktionsgas kann beispielsweise durch Vereinigung verschiedener Mengen bei der Zubereitung des Reduktionsgases variiert werden. Beispielsweise kann so variiert werden, dass der Anteil des Wasserstoffs im Reduktionsgas zunimmt.

Das Reduktionsgas ist das in den Reduktionsreaktor eingeleitete Gas mit seiner bei der Einleitung vorliegenden Zusammensetzung und Temperatur. Bevor diese Zusammensetzung und Temperatur gegeben sind, liegt ein Vorläufer des Reduktionsgases vor, auf dessen Basis das Reduktionsgas zubereitet wird. Die Zubereitung kann beispielsweise umfassen Hinzugabe weiterer Komponenten, Erhitzung, Reformierung. Die Zubereitung kann auch durch im Vorläufer ohne äußeres Zutun ablaufende chemische Reaktionen umfassen, welche beispielsweise die chemische Zusammensetzung beziehungsweise die Temperatur ändern. Bei Veränderungen an der Zubereitung kann sich der Anteil des Wasserstoffs im Reduktionsgas ändern.

Jedenfalls werden bei der Zubereitung des Reduktionsgases Gasbrenner eingesetzt, beispielsweise bei Erhitzung und/oder Reformierung.

Bei dem Reduktionsreaktor handelt es sich beispielsweise um einen Reduktionsschacht - zum Beispiel bei Durchführung eines Direktreduktionsverfahrens mit einem ein Festbett von metalloxidhaltigem Material enthaltenden Reduktionsschacht. Bei dem Reduktionsreaktor handelt es sich beispielsweise um einen Fließbettreaktor - zum Beispiel bei Durchführung eines Direktreduktionsverfahrens mit einem ein Fließbett von metalloxidhaltigem Material enthaltenden Reduktionsreaktor. Der Fließbettreaktor kann dabei auch mehrere einzelne Teilreaktoren umfassen, die beispielweise parallel oder sequenziell geschaltet sind und gemeinsam den Fließbettreaktor bilden.

Bei dem Reduktionsreaktor handelt es sich beispielsweise um einen Wirbelschichtreaktor - zum Beispiel bei Durchführung eines Direktreduktionsverfahrens mit einem ein Wirbelschicht von metalloxidhaltigem Material enthaltenden Reduktionsreaktor. Der Wirbelschichtreaktor kann dabei auch mehrere einzelne Teilreaktoren umfassen, die beispielweise parallel oder sequenziell geschaltet sind und gemeinsam den Wirbelschichtbettreaktor bilden.

Aus dem Reduktionsreaktor wird ein Topgas ausgeleitet. Das Topgas entsteht aus dem Reduktionsgas beim Durchströmen des Reduktionsreaktors aufgrund der im Reduktionsreaktor stattfindenden Reaktionen seiner Komponenten mit dem metalloxidhaltigen Material beziehungsweise den bei diesen Reaktionen entstehenden Produkten, beispielsweise dem entstehenden metallischen Eisen. Das Topgas besitzt infolge der im Reduktionsreaktor stattgefundenen Reduktionsreaktionen weniger Reduktionskraft als das Reduktionsgas. Das Topgas enthält Wasserstoff.

Gasbrenner benötigen für die Verbrennung ein Brennstoffgas. Eine Teilmenge des Topgases wird bei der Zubereitung des Reduktionsgases eingesetzten Gasbrennern als Komponente des für Verbrennung benötigten Brennstoffgases zugeführt; bei mehreren Gasbrennern zumindest einem Gasbrenner. Beispielsweise wird von 100 Nm³ Topgas eine Teilmenge von 10 Nm³ als Komponente des Brennstoffgas verwendet. Vor der Verwendung als Komponente Brennstoffgas können an dem Topgas Behandlungsschritte vorgenommen werden, beispielsweise kann eine Entstaubung des Topgases erfolgen, eine Erhitzung des Topgases, eine Kühlung des Topgases, eine Einstellung des Wasserdampfgehaltes des Topgases.

Die Teilmenge des Topgases kann eine von mehreren Komponenten des Brennstoffgases sein, beispielsweise wenn ein weiteres Gas - beispielsweise Erdgas - mit Brennwert zugemischt wird und die Gasmischung dann als Brennstoffgas genutzt wird.

Die Teilmenge des Topgases kann auch die einzige Komponente des Brennstoffgases sein, dann entspricht das Brennstoffgas dieser Teilmenge.

Wenn es mehrere Komponenten des Brennstoffgases gibt, gilt: durch Vereinigung aller Komponenten des Brennstoffgases entsteht das Brennstoffgas; bevor alle Komponenten vereinigt sind, liegt ein Vorläufer des Brennstoffgases vor.

Maßnahmen zur Erhöhung des Wasserdampfgehaltes in einer oder mehreren Komponenten des Brennstoffgases oder in einem Vorläufer des Brennstoffgases führen auch zur Erhöhung des Wasserdampfgehaltes des Brennstoffgases.

Bei Zunahme des Anteils von Wasserstoff im Reduktionsgas und/oder im Topgas wird eine Erhöhung des Wasserdampfgehaltes des Brennstoffgases vorgenommen. Dazu erfolgen Maßnahmen, die gegenüber einem Vergleichszustand das Vorhandensein zusätzlichen Wasserdampfes im Brennstoffgas hervorrufen.

Vorzugsweise beträgt der Wasserstoff H₂-Anteil im Brennstoffgas zumindest 65 Volums%, besonders bevorzugt zumindest 70 Volums% - jeweils bezogen auf 0 Volums% Wassergehalt im Brennstoffgas.

### Vorteilhafte Wirkungen der Erfindung

Eine Erhöhung des Wasserdampfgehaltes des Brennstoffgases hat bei Verbrennung die Folge, dass die adiabatische Flammentemperatur im Vergleich zu einem bis auf den erhöhten Wasserdampfgehalt gleichen Brennstoffgas geringer ist. Die eingangs beschriebenen Probleme bezüglich Stickoxidentstehung und Wärmeübertragung bei infolge steigendem Wasserstoffanteils höherer adiabatischer Flammentemperatur können also vermindert beziehungsweise vermieden werden.

Vorteilhaft ist dabei auch, dass die erfindungsgemäß ermöglichte Verminderung der adiabatischen Flammentemperatur keiner Verminderung des Temperaturniveaus des Brennstoffgases und des Oxidationsgases bedarf. Damit kann dem Abgas der Gasbrenner per Wärmetausch eine gleichbleibende Menge Energie entzogen werden, was bezüglich Entlassung der Abgase in die Umwelt günstig ist. Eine Entlassung der Abgase mit höherer Temperatur - weil weniger Wärme in Brennstoffgas und Oxidationsgas hinein entzogen wird, um durch eine niedrigere Temperatur dieser Gase eine Verminderung der Flammentemperatur zu erzielen - infolge geringerer Menge an per Wärmetausch entzogener Energie ist ungünstig.

Üblicherweise wird der Wasserdampfgehalt des Topgases auf einen Zielwert eingestellt, um möglichst reproduzierbare Eigenschaften für gut kontrollierbare weitere Nutzung des Topgases zu gewährleisten. Dazu wird es üblicherweise einer Konditionierung im Gegenstrom mit Wasser unterworfen, die in einem Gaskonditionierer durchgeführt wird. Verschiedene Teilmengen des Topgases, die beispielsweise für verschiedene Nutzungen mit unterschiedlichen Anforderungen an den Wasserdampfgehalt vorgesehen sind - beispielsweise Nutzung als Komponente des Reduktionsgases, Nutzung als Komponente eines Brennstoffgases -, werden üblicherweise in verschiedenen

Gaskonditionierungskanälen mit verschieden temperierten Wassern konditioniert. Nach einer Ausführungsform wird die Erhöhung des Wasserdampfgehaltes des Brennstoffgases vorgenommen, indem die Temperatur des bei der Konditionierung der Teilmenge des Topgases verwendeten Wassers erhöht wird. Die den Gaskonditionierer verlassende Teilmenge des Topgases ist gesättigt; mit steigender Temperatur des Wassers steigt die Temperatur der den Gaskonditionierer verlassenden Teilmenge des Topgases und damit die bei Sättigung enthaltene Wasserdampfmenge.

Üblicherweise wird bei der Konditionierung das für Nutzung als Komponente des Reduktionsgases vorgesehene Topgas in eigenen Gaskonditionierungskanälen unter Nutzung von Warmwasser konditioniert. Im Vergleich zu einem ersten Zustand mit einem bestimmten Wasserdampfgehalt des Topgases vor der Konditionierung und einer bestimmten Zielvorgabe des Wasserdampfgehaltes nach der Konditionierung gilt: je höher der Wasserdampfgehalt des Topgases vor der Konditionierung ist - je mehr Wasser also für die Einstellung einer unveränderten Zielvorgabe auszukondensieren ist -, desto günstiger ist es, zur Konditionierung Wasser mit im Vergleich zum ersten Zustand geringerer Temperatur einzusetzen. Die Nachfrage nach dem zur Herstellung des ersten Zustandes bereitgestellten Warmwasser sinkt also. Nach einer Ausführungsform wird die Temperatur des Wassers, das für die Konditionierung der als Komponente des Brennstoffgases vorgesehenen Teilmenge des Topgases verwendet wird, erhöht, indem für die Konditionierung von als Komponente des Reduktionsgases vorgesehenem Topgas vorgesehenes Warmwasser eingesetzt wird - dabei kann es eine Teilmenge des Wassers zur Konditionierung des Topgases ausmachen, oder das gesamte Wasser zur Konditionierung des Topgases sein.

Auf diese Weise kann die Infrastruktur zur Herstellung von Warmwasser auch dann sinnvoll genutzt werden, wenn der Bedarf an Warmwasser zur Konditionierung des Reduktionsgases sinkt

Nach einer Ausführungsform wird die Erhöhung des Wasserdampfgehaltes des Brennstoffgases vorgenommen, indem dem Brennstoffgas - beziehungsweise einer Komponente beziehungsweise einem Vorläufer des Brennstoffgases - Wasser H₂O zugegeben wird. Das Wasser kann flüssig H₂O_{f} zugegeben werden. Das Wasser H₂O kann als Wasserdampf H₂O_{g} zugegeben werden. Durch Vereinigung aller Komponenten des Brennstoffgases entsteht das Brennstoffgas. Bevor alle Komponenten vereinigt sind, liegt ein Vorläufer des Brennstoffgases vor.

Nach einer Variante des erfindungsgemäßen Verfahrens wird das Brennstoffgas - beziehungsweise ein Vorläufer des Brennstoffgases - erwärmt, bevor das Brennstoffgas verbrannt wird. Das geschieht beispielsweise mittels Wärmetausch mit Abgas eines Reformers und/oder einer Gaserhitzungsvorrichtung; beispielsweise Abgas aus Reformer und/oder Gaserhitzungsvorrichtung, die mit den mit dem Brennstoffgas versorgten Gasbrennern betriebenen werden. Vorzugsweise wird dem Brennstoffgas - beziehungsweise einem Vorläufer des Brennstoffgases - Wasser H₂O zugegeben, nachdem das Brennstoffgas - beziehungsweise der Vorläufer des Brennstoffgases - erwärmt wurde. Dann kann aufgrund der höheren Temperatur mehr Wasser H₂O aufgenommmen werden. Das ist besonders dann günstig, wenn eine Komponente des Brennstoffgases Wasserstoff H₂ ist, der zugegeben wird, da Wasserstoff H₂ meist weitgehend trocken ist und somit nach seinem Eintritt in eine Gasmischung deren prozentueller Wassergehalt sinkt.

Wie erwähnt können an dem Topgas vor der Verwendung als Komponente des Brennstoffgases Behandlungsschritte wie beispielsweise eine Entstaubung vorgenommen werden. Nach einer Ausführungsform wird das zur Verwendung als Komponente des Brennstoffgases vorgesehene Topgas zumindest teilweise trocken entstaubt. Bei Trockenentstaubung tritt praktisch kein Verlust an Wasserdampfgehalt auf, der hinterher wieder bei der Erhöhung des Wasserdampfgehaltes ausgeglichen werden müsste; daher ist es vorteilhaft, die als Komponente des Brennstoffgases vorgesehene Teilmenge des Topgases trocken zu entstauben. Wenn eine Komponente des Brennstoffgases Wasserstoff H₂ ist, der zugegeben wird, ist es vorteilhaft, ihn zuzugeben, nachdem trocken entstaubt wurde. Das deshalb, weil Wasserstoff H₂ meist weitgehend trocken ist und somit nach seinem Eintritt in eine Gasmischung deren prozentueller Wassergehalt sinkt. Nach der Trockenentstaubung ist der Wasserdampfgehalt in der Regel hoch genug, dass eine Erniedrigung infolge Wasserstoffzugabe keinen oder nur geringen Aufwand zum Treffen beziehungsweise Überschreiten eines gewünschten Mindestwertes nach sich zieht.

Bei Trockenentstaubung tritt praktisch kein Verlust an fühlbarer Wärme auf Bei Trockenentstaubung muss daher das Brennstoffgas nicht oder weniger vorgewärmt werden. Die im Topgas verbleibende Energie kann beispielsweise zur Vorwärmung von Wasserstoff, Verbrennungsluft oder Prozessgas oder Reduktionsgas genutzt werden.

Ein weiterer Gegenstand der vorliegenden Anmeldung ist eine Vorrichtung zur Reduktion von metalloxidhaltigem Material,
umfassend:
   - einen Reduktionsreaktor,
   - eine Topgasausleitung zur Ausleitung von Topgas aus dem Reduktionsreaktor,
   - eine zumindest einen Gasbrenner umfassende Zubereitungsanlage zur Zubereitung von Reduktionsgas,
   - eine Zufuhrleitung zur Zufuhr einer Teilmenge des Topgases als Brennstoffgas-Komponente zu dem zumindest einen Gasbrenner,
dadurch gekennzeichnet, dass sie auch umfasst
   - zumindest eine Vorrichtung zur Bestimmung des Wasserdampfgehaltes im Reduktionsgas und/oder im Topgas,
      und
   - eine Vorrichtung zur Steuerung und/oder Regelung des Wasserdampfgehaltes im Brennstoffgas unter Einbeziehung des Wasserstoffgehaltes im Reduktionsgas und/oder im Topgas.

Die Vorrichtung zur Reduktion von metalloxidhaltigem Material kann einen oder mehrere Reduktionsreaktoren umfassen.

Die Vorrichtung zur Reduktion von metalloxidhaltigem Material umfasst auch eine Reduktionsgaszuleitung, über die dem Reduktionsreaktor Reduktionsgas zugeführt wird.

Die Vorrichtung zur Reduktion von metalloxidhaltigem Material kann eine oder mehrere Topgasausleitungen umfassen.

Die Vorrichtung zur Reduktion von metalloxidhaltigem Material kann eine oder mehrere Zubereitungsanlagen zur Zubereitung von Reduktionsgas umfassen.

Eine Zubereitungsanlagen zur Zubereitung von Reduktionsgas kann einen oder mehrere Gasbrenner umfassen.

Die Vorrichtung zur Reduktion von metalloxidhaltigem Material kann eine oder mehrere Zufuhrleitungen zur Zufuhr einer Teilmenge des Topgases als Brennstoffgas-Komponente zu dem zumindest einen Gasbrenner umfassen; diese sind geeignet, eine Teilmenge des Topgases gemeinsam mit anderen Komponenten des Brennstoffgases den Gasbrennern als Brennstoffgas zuzuführen. Andere Komponenten des Brenngases können dabei beispielsweise durch in die die Teilmenge des Topgases führende Zufuhrleitung mündende Zuspeisleitungen zugespeist werden, wodurch das Brennstoffgas entsteht. Die Vorrichtung zur Reduktion von metalloxidhaltigem Material umfasst zumindest eine Vorrichtung zur Bestimmung des Wasserdampfgehaltes im Reduktionsgas und/oder im Topgas; sie kann auch mehrere solche Vorrichtungen umfassen. Die Bestimmung des Wasserdampfgehaltes kann beispielsweise auf einer Berechnung auf Basis von Gastemperatur und/oder Wassertemperatur beruhen.

Die Vorrichtung zur Reduktion von metalloxidhaltigem Material umfasst eine Vorrichtung zur Steuerung und/oder Regelung des Wasserdampfgehaltes im Brennstoffgas unter Einbeziehung des Wasserstoffgehaltes im Reduktionsgas und/oder im Topgas; sie kann auch mehrere solche Vorrichtungen umfassen.

Mit einer solchen Vorrichtung kann das Ziel erreicht werden, den Wasserdampfgehaltes im Brennstoffgas unter Einbeziehung des Wasserstoffgehaltes im Reduktionsgas und/oder im Topgas zu steuern und/oder zu regeln. Auf diese Weise kann ein erfindungsgemäßes Verfahren durchgeführt werden. Nach einer Ausführungsform umfasst die Vorrichtung zur Steuerung und/oder Regelung des Wasserdampfgehaltes im Brennstoffgas unter Einbeziehung des Wasserstoffgehaltes im Reduktionsgas und/oder im Topgas
zumindest einen Gaskonditionierer. In einem Gaskonditionierer wird Gas bezüglich seines Wasserdampfgehaltes konditioniert, das heißt, es wird eine Maßnahme ergriffen, die zur Erreichung eines Zielwertes für den Wasserdampfgehalt führt. Die Maßnahme in einem Gaskonditionierer ist, den zu konditionierenden Gasstrom im Gegenstrom mit Wasser zu führen. Wärme und Wasser werden dabei zwischen der Gasphase und der Flüssigkeitsphase ausgetauscht.

In einer erfindungsgemäßen Vorrichtung ist der Gaskonditionierer mit derart ausgestaltet, dass er bei verschiedenen Temperaturen des Wassers betrieben werden kann. Dazu kann er beispielsweise verschiedene Wasserzuleitungen aufweisen, die jeweils mit Wasser aus verschieden temperierten Wasserquellen verbunden sind. Dazu kann er beispielsweise Heizvorrichtungen und/oder Kühlvorrichtungen zum Erhitzen und/oder Kühlen von zugeleitetem Wasser aufweisen.

Nach einer Ausführungsform weist der Gaskonditionierer

Brennstoffgaskonditionierungskanäle für Konditionierung von als Komponente des Brennstoffgases vorgesehenem Topgas mit einer Wasserzufuhr zur Brennstoffgaskonditionierung auf,
und Reduktionsgaskonditionierungskanäle für Konditionierung von als Komponente des Reduktionsgases vorgesehenem Topgas mit einer Warmwasserzufuhr zur Reduktionsgaskonditionierung auf,
wobei die Warmwasserzufuhr zur Reduktionsgaskonditionierung geeignet ist, zumindest einem Brennstoffgaskonditionierungskanal Warmwasser zur Brennstoffgaskonditionierung zuzuführen.

Nach einer Ausführungsform umfasst die Vorrichtung zur Reduktion von metalloxidhaltigem Material H₂O-Zugabeleitungen, die geeignet sind, flüssiges Wasser H₂O_{f} und/oder gasförmiges Wasser H₂O_{g} - also Wasserdampf - in Leitungen einzubringen, welche
- Brennstoffgas
   oder
- Komponenten des Brennstoffgases
   führen.

Beispielsweise kann eine H₂O-Zugabeleitung in eine Brennstoffgas führende Leitung münden. Oder sie kann in eine Leitung münden, die eine Komponente des Brennstoffgases führt, beispielsweise in eine Zufuhrleitung zur Zufuhr einer Teilmenge des Topgases als Brennstoffgas-Komponente zu dem zumindest einen Gasbrenner; die Mündung kann dabei vor und/oder nach - in Strömungsrichtung zum Gasbrenner hin gesehen - Mündungen von Zuspeisleitungen angeordnet sein.

Nach einer Ausführungsform umfasst die Vorrichtung zur Reduktion von metalloxidhaltigem Material eine Trockenentstaubungsvorrichtung zur trockenen Entstaubung von Topgas; bevorzugt ist diese geeignet zur trockenen Entstaubung zumindest einer Teilmenge des zur Verwendung als Komponente des Brennstoffgases vorgesehenen Topgases.

Ein weiterer Gegenstand der vorliegenden Anmeldung ist eine Signalverarbeitungseinrichtung mit einem maschinenlesbaren Programmcode, dadurch gekennzeichnet, dass er Steuer und/oder Regelbefehle zur Durchführung eines erfindungsgemäßen Verfahrens aufweist. Bei einem weiteren Gegenstand handelt es sich um eine Signalverarbeitungseinrichtung zur Durchführung eines Verfahrens nach einem der Ansprüche 1 bis 5.

Ein weiterer Gegenstand der vorliegenden Anmeldung ist ein maschinenlesbarer Programmcode für eine Signalverarbeitungseinrichtung, dadurch gekennzeichnet, dass der Programmcode Steuer und/oder Regelbefehle aufweist, welche die Signalverarbeitungseinrichtung zur Durchführung eines erfindungsgemäßen Verfahrens veranlassen. Bei einem weiteren Gegenstand handelt es sich um ein Computerprogrammprodukt umfassend Befehle für eine Signalverarbeitungseinrichtung, die bei der Ausführung des Programms für die Signalverarbeitungsvorrichtung diese veranlassen, das Verfahren nach einem der Ansprüche 1 bis 5 durchzuführen.

Ein weiterer Gegenstand der vorliegenden Anmeldung ist ein Speichermedium mit einem darauf gespeicherten erfindungsgemäßen maschinenlesbaren Programmcode. Bei einem weiteren Gegenstand handelt es sich um ein Speichermedium mit einem darauf gespeicherten Computerprogramm zur Durchführung eines Verfahrens nach einem der Ansprüche 1 bis 5.

### Kurze Beschreibung der Zeichnungen

Nachfolgend wird die vorliegende Erfindung anhand mehrerer schematischer Figuren beispielhaft beschrieben.
Figur 1 zeigt schematisch eine Ausführungsform einer erfindungsgemäßen Vorrichtung.
Figuren 2 zeigt schematisch eine zu Figur 1 weitgehend analoge Ausführungsform mit Details zu H₂O-Zugabeleitungen.
Figuren 3 zeigt schematisch eine zu Figuren 1 und 2 weitgehend analoge Ausführungsform mit Details zur Trockenentstaubung.
Figur 4 zeigt schematisch eine Variante der Nutzung von nicht für Brennstoffgas verwendetem Topgas.

### Beschreibung der Ausführungsformen

### Beispiele

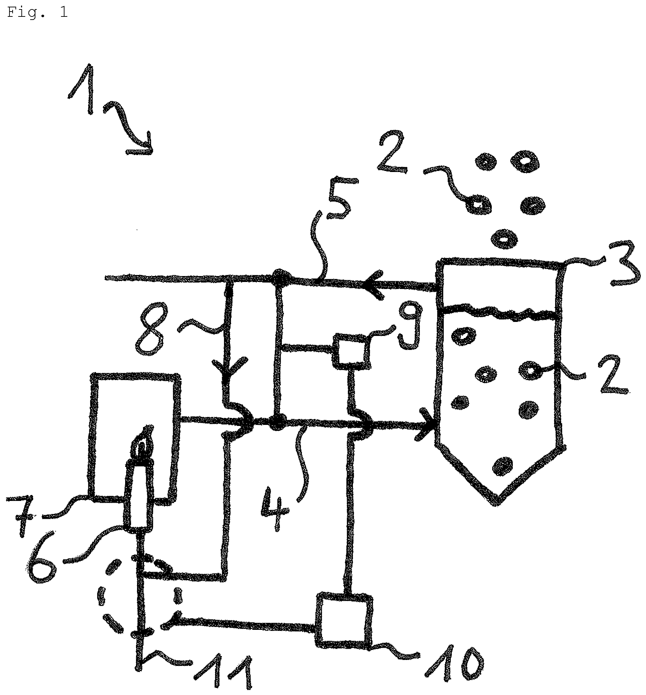

Figur 1 zeigt schematisch eine Vorrichtung 1 zur Reduktion von metalloxidhaltigem Material 2 mit einem Reduktionsreaktor 3. Das metalloxidhaltige Material 2 wird in den Reduktionsreaktor 3 eingegeben. Die Vorrichtung 1 zur Reduktion von metalloxidhaltigem Material 2 umfasst auch eine Reduktionsgaszuleitung 4, über die dem Reduktionsreaktor 3 Reduktionsgas zugeführt wird, das zumindest Wasserstoff, gegebenenfalls auch Kohlenstoffträger enthält. Über eine Topgasausleitung 5 wird ein Wasserstoff enthaltendes Topgas aus dem Reduktionsreaktor 3 ausgeleitet. Reduktionsgas wird in einer einen Gasbrenner 6 umfassende Zubereitungsanlage 7 zur Zubereitung von Reduktionsgas zubereitet. Der Gasbrenner 6 wird mit Brennstoffgas betrieben. Eine Teilmenge des Topgases wird als Brennstoffgas-Komponente zu dem Gasbrenner 6 zugeführt; das geschieht über eine Zufuhrleitung 8 zur Zufuhr einer Teilmenge des Topgases als Brennstoffgas-Komponente zu dem Gasbrenner 6. Es ist auch eine Vorrichtung 9 zur Bestimmung des Wasserdampfgehaltes im Reduktionsgas und im Topgas vorhanden. Mit dieser wird festgestellt, ob eine Zunahme des Anteils von Wasserstoff im Reduktionsgas und/oder im Topgas vorkommt. Die dargestellten Positionen, an denen der Anteil des Wasserstoffs bestimmt wird, sind nicht zwingend wie in Figur 1 illustriert vorzusehen; der Anteil des Wasserstoffs könnte auch an anderen Positionen bestimmt werden; beispielsweise könnte er nach einer Trockenentstaubung bestimmt werden. Unter Einbeziehung des Wasserstoffgehaltes im Reduktionsgas und/oder im Topgas wird mit einer ebenfalls vorhandenen Vorrichtung 10 zur Steuerung und/oder Regelung des Wasserdampfgehaltes im Brennstoffgas eine Erhöhung des Wasserdampfgehaltes des Brennstoffgases vorgenommen, dargestellt durch einen strichlierten Kreis um Teilabschnitte von Leitungen, die Brennstoffgas-Komponenten beziehungsweise Brennstoffgas zum dem Gasbrenner 6 leiten. Über Zuspeisleitung 11 wird eine weitere Brennstoffgas-Komponente zum Gasbrenner 6 geleitet; Topgas und weitere Brennstoffgas-Komponente werden in der Darstellung vereinigt, weil die Leitung 11 und die Zufuhrleitung 8 zusammenmünden; durch die Vereinigung der weiteren Brennstoffgas-Komponente und des Topgases entsteht Brennstoffgas, das zum Gasbrenner 6 geleitet wird.

Nach einer Variante umfasst die Vorrichtung 10 zur Steuerung und/oder Regelung des Wasserdampfgehaltes im Brennstoffgas unter Einbeziehung des Wasserstoffgehaltes im Reduktionsgas und/oder im Topgas einen Gaskonditionierer, was zur besseren Übersichtlichkeit nicht extra dargestellt ist. Der Gaskonditionierer ist derart ausgestaltet, dass er bei verschiedenen Temperaturen des Wassers betrieben werden kann. Dazu kann er beispielsweise verschiedene Wasserzuleitungen aufweisen, die jeweils mit Wasser aus verschieden temperierten Wasserquellen verbunden sind. Dazu kann er beispielsweise Heizvorrichtungen und/oder Kühlvorrichtungen zum Erhitzen und/oder Kühlen von zugeleitetem Wasser aufweisen. Damit wird die Erhöhung des Wasserdampfgehaltes des Brennstoffgases vorgenommen, indem die Temperatur des bei der Konditionierung der Teilmenge des Topgases verwendeten Wassers erhöht wird. Nach einer nicht extra dargestellten Variante weist der Gaskonditionierer Brennstoffgaskonditionierungskanäle mit einer Wasserzufuhr zur Brennstoffgaskonditionierung auf, und Reduktionsgaskonditionierungskanäle mit einer Warmwasserzufuhr zur Reduktionsgaskonditionierung auf. Dabei ist die Warmwasserzufuhr zur Reduktionsgaskonditionierung geeignet, zumindest einem Brennstoffgaskonditionierungskanal Warmwasser zur Brennstoffgaskonditionierung zuzuführen. Dann kann die Temperatur des bei der Konditionierung dieser Teilmenge des Topgases verwendeten Wassers erhöht werden, indem für die Konditionierung von als Komponente des Reduktionsgases vorgesehenem Topgas vorgesehenes Warmwasser eingesetzt wird.

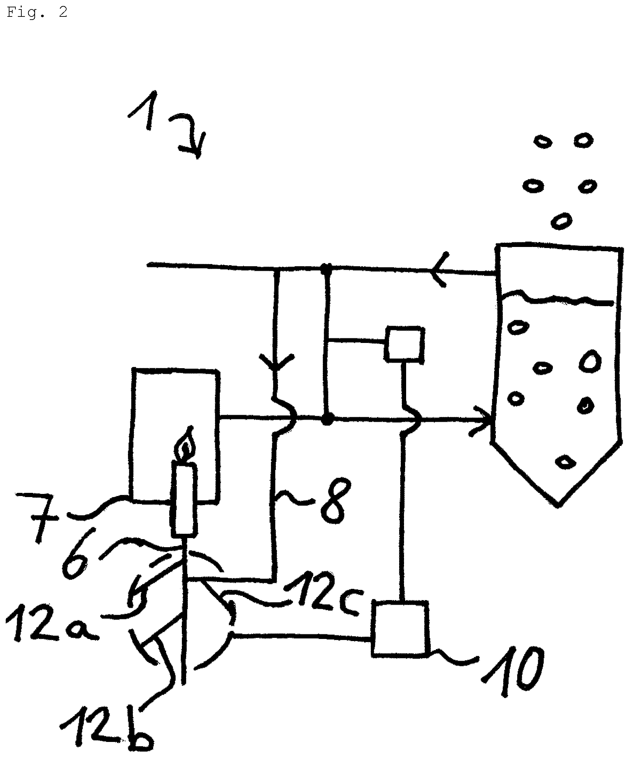

Figur 2 zeigt in einer zu Figur 1 weitgehend analogen Darstellung, wie H₂O-Zugabeleitungen 12a, 12b, 12c vorhanden sind. Über diese wird flüssiges Wasser H₂O_{f} und/oder gasförmiges Wasser H₂O_{g} - also Wasserdampf - in Leitungen eingebracht, welche Brennstoffgas oder Komponenten des Brennstoffgases führen. H₂O-Zugabeleitung 12a mündet in eine Brennstoffgas führende Leitung. H₂O-Zugabeleitungen 12b und 12c münden in Komponenten des Brennstoffgases führende Leitungen. Somit kann die Erhöhung des Wasserdampfgehaltes des Brennstoffgases vorgenommen werden, indem man dem Brennstoffgas - beziehungsweise einem Vorläufer des Brennstoffgases beziehungsweise einer Komponente des Brennstoffgases - Wasser H₂O zugibt.

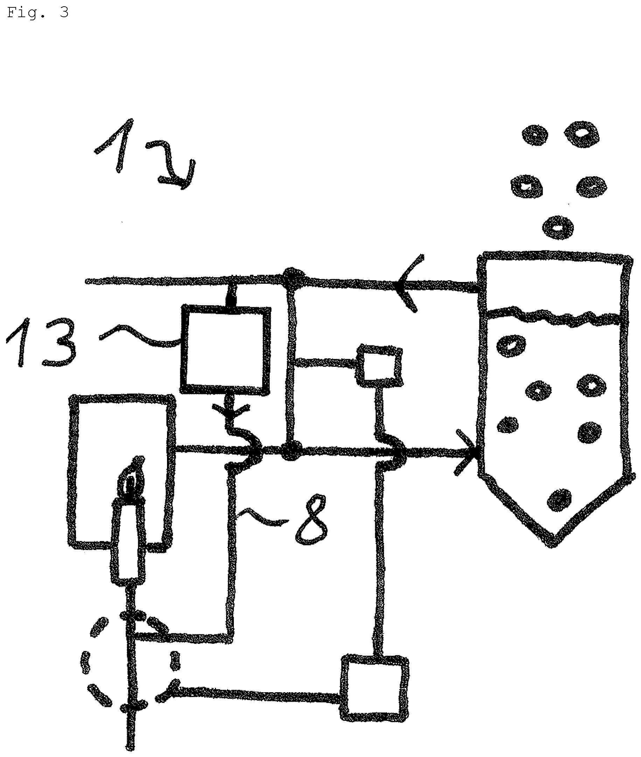

Figur 3 zeigt in einer zu Figuren 1 und 2 weitgehend analogen Darstellung, wie die Vorrichtung 1 zur Reduktion von metalloxidhaltigem Material eine Trockenentstaubungsvorrichtung 13 zur trockenen Entstaubung von Topgas enthält. Diese ist zur trockenen Entstaubung zumindest einer Teilmenge des zur Verwendung als Komponente des Brennstoffgases vorgesehenen Topgases geeignet, da sie in der Zufuhrleitung 8 angeordnet ist. Nach einer nicht extra dargestellten Variante kann die Vorrichtung 10 zur Steuerung und/oder Regelung des Wasserdampfgehaltes im Brennstoffgas so ausgeführt sein, dass sie die Temperatur in der Trockenentstaubungsvorrichtung beeinflussen kann und auf diese Weise Steuerung und/oder Regelung des Wasserdampfgehaltes im Brennstoffgas erfolgen kann.

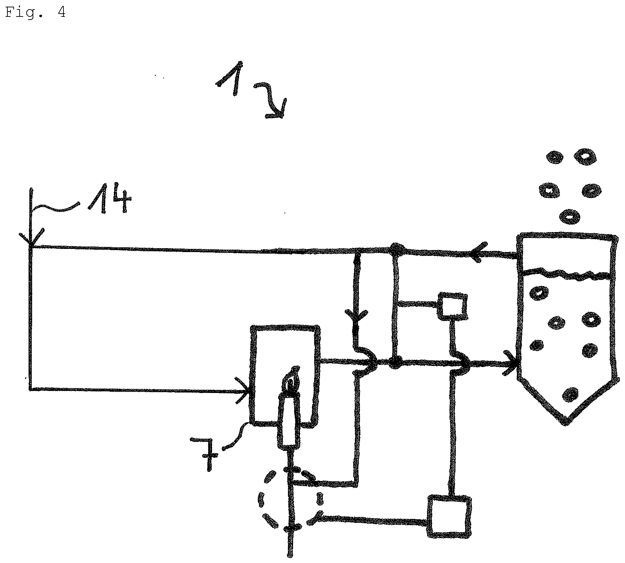

Zur besseren Übersichtlichkeit wurde in den Figuren 1 bis 3 nicht dargestellt, was mit Topgas geschehen kann, das nicht als Brennstoffgas-Komponente genutzt wird. In Figur 4 ist schematisch dargestellt, wie eine Variante solcher Nutzung erfolgen kann, in einer Darstellung analog zu Figur 1 - Topgas wird mit einem Reduktionsgasvorläufer 14 - beispielsweise Erdgas und/oder Wasserstoff vereinigt und das Gemisch in die Zubereitungsanlage zur Zubereitung von Reduktionsgas eingeleitet. Topgas dient dabei also als Reduktionsgasvorläufer. Eine solche Rezirkulierung von Topgas und seine Nutzung bei der Zubereitung von Reduktionsgas ist bekannt und daher nicht im Detail beschrieben.

### Liste der Bezugszeichen

- 1: Vorrichtung zur Reduktion von metalloxidhaltigem Material
- 2: metalloxidhaltiges Material
- 3: Reduktionsreaktor
- 4: Reduktionsgaszuleitung
- 5: Topgasausleitung
- 6: Gasbrenner
- 7: Zubereitungsanlage zur Zubereitung von Reduktionsgas
- 8: Zufuhrleitung
- 9: Vorrichtung zur Bestimmung des Wasserdampfgehaltes im Reduktionsgas und/oder im Topgas
- 10: Vorrichtung zur Steuerung und/oder Regelung des Wasserdampfgehaltes im Brennstoffgas
- 11: Zuspeisleitung
- 12a,12b,12c: H₂O-Zugabeleitungen
- 13: Trockenentstaubungsvorrichtung
- 14: Reduktionsgasvorläufer

## Patentansprüche

1. Verfahren zur Reduktion von metalloxidhaltigem Material,
wobei ein zumindest Wasserstoff, gegebenenfalls auch Kohlenstoffträger, enthaltendes Reduktionsgas
einem das metalloxidhaltige Material enthaltenden Reduktionsreaktor (3) zugeführt wird, und aus dem Reduktionsreaktor (3) ein Wasserstoff enthaltendes Topgas ausgeleitet wird,
**dadurch gekennzeichnet, dass**
eine Teilmenge des Topgases bei der Zubereitung des Reduktionsgases eingesetzten Gasbrennern (6) als Komponente des Brennstoffgases zugeführt wird,
und bei Zunahme des Anteils von Wasserstoff im Reduktionsgas und/oder im Topgas eine Erhöhung des Wasserdampfgehaltes des Brennstoffgases vorgenommen wird.

2. Verfahren nach Anspruch 1, wobei das Topgas in einem Gaskonditionierer einer Konditionierung im Gegenstrom mit Wasser unterworfen wird, **dadurch gekennzeichnet, dass** die Erhöhung des Wasserdampfgehaltes des Brennstoffgases vorgenommen wird, indem die Temperatur des bei der Konditionierung der Teilmenge des Topgases verwendeten Wassers erhöht wird.

3. Verfahren nach Anspruch 2, **dadurch gekennzeichnet, dass** die Temperatur des Wassers, das für die Konditionierung der als Komponente des Brennstoffgases vorgesehenen Teilmenge des Topgases verwendet wird, erhöht wird, indem für die Konditionierung von als Komponente des Reduktionsgases vorgesehenem Topgas vorgesehenes Warmwasser eingesetzt wird.

4. Verfahren nach einem der Ansprüche 1 bis 3, **dadurch gekennzeichnet, dass** die Erhöhung des Wasserdampfgehaltes des Brennstoffgases vorgenommen wird, indem dem Brennstoffgas und/oder einem Vorläufer des Brennstoffgases und/oder einer Komponente des Brennstoffgases - Wasser H₂O zugegeben wird.

5. Verfahren nach einem der Ansprüche 1 bis 4, **dadurch gekennzeichnet, dass** das zur Verwendung als Komponente des Brennstoffgases vorgesehene Topgas zumindest teilweise trocken entstaubt wird.

6. Vorrichtung (1) zur Reduktion von metalloxidhaltigem Material (2),
umfassend:
- einen Reduktionsreaktor (3),
- eine Topgasausleitung (5) zur Ausleitung von Topgas aus dem Reduktionsreaktor (3),
- eine zumindest einen Gasbrenner (6) umfassende Zubereitungsanlage (7) zur Zubereitung von Reduktionsgas,
- eine Zufuhrleitung (8) zur Zufuhr einer Teilmenge des Topgases als Brennstoffgas-Komponente zu dem zumindest einen Gasbrenner (6),
**dadurch gekennzeichnet, dass** sie auch umfasst
- zumindest eine Vorrichtung (9) zur Bestimmung des Wasserdampfgehaltes im Reduktionsgas und/oder im Topgas,
und
- eine Vorrichtung (10) zur Steuerung und/oder Regelung des Wasserdampfgehaltes im Brennstoffgas unter Einbeziehung des Wasserstoffgehaltes im Reduktionsgas und/oder im Topgas.

7. Vorrichtung nach Anspruch 6, **dadurch gekennzeichnet, dass** die Vorrichtung (10) zur Steuerung und/oder Regelung des Wasserdampfgehaltes im Brennstoffgas unter Einbeziehung des Wasserstoffgehaltes im Reduktionsgas und/oder im Topgas zumindest einen Gaskonditionierer umfasst.

8. Vorrichtung nach Anspruch 7, **dadurch gekennzeichnet, dass** der Gaskonditionierer Brennstoffgaskonditionierungskanäle für Konditionierung von als Komponente des Brennstoffgases vorgesehenem Topgas mit einer Wasserzufuhr zur Brennstoffgaskonditionierung aufweist,
und Reduktionsgaskonditionierungskanäle für Konditionierung von als Komponente des Reduktionsgases vorgesehenem Topgas mit einer Warmwasserzufuhr zur Reduktionsgaskonditionierung aufweist,
wobei die Warmwasserzufuhr zur Reduktionsgaskonditionierung geeignet ist, zumindest einem Brennstoffgaskonditionierungskanal Warmwasser zur Brennstoffgaskonditionierung zuzuführen.

9. Vorrichtung nach einem der Ansprüche 6 bis 8, **dadurch gekennzeichnet, dass** die Vorrichtung zur Reduktion von metalloxidhaltigem Material H₂O-Zugabeleitungen 12a, 12b, 12c umfasst, die geeignet sind, flüssiges Wasser H₂O_{f} und/oder gasförmiges Wasser H₂O_{g} in Leitungen einzubringen, welche
- Brennstoffgas
oder
- Komponenten des Brennstoffgases
führen.

10. Vorrichtung nach einem der Ansprüche 6 bis 9, **dadurch gekennzeichnet, dass** sie eine Trockenentstaubungsvorrichtung (13) zur trockenen Entstaubung von Topgas umfasst, bevorzugt geeignet zur trockenen Entstaubung zumindest einer Teilmenge des zur Verwendung als Komponente des Brennstoffgases vorgesehenen Topgases.

11. Signalverarbeitungseinrichtung mit einem maschinenlesbaren Programmcode, **dadurch gekennzeichnet, dass** er Steuer und/oder Regelbefehle zur Durchführung eines erfindungsgemäßen Verfahrens aufweist. Bei einem weiteren Gegenstand handelt es sich um eine Signalverarbeitungseinrichtung zur Durchführung eines Verfahrens nach einem der Ansprüche 1 bis 5.

12. Maschinenlesbarer Programmcode für eine Signalverarbeitungseinrichtung, **dadurch gekennzeichnet, dass** der Programmcode Steuer und/oder Regelbefehle aufweist, welche die Signalverarbeitungseinrichtung zur Durchführung eines Verfahrens nach einem der Ansprüche 1 bis 5 veranlassen.

13. Speichermedium mit einem darauf gespeicherten maschinenlesbaren Programmcode nach Anspruch 12.
